# EUROPÄISCHE PATENTSCHRIFT

(11) **EP 4 133 925 B1**
(45) Veröffentlichungstag und Bekanntmachung des Hinweises auf die Patenterteilung: **14.02.2024**
(21) Anmeldenummer: 22168342.8
(22) Anmeldetag: 14.04.2022
(51) Int. Cl.: A01B 63/112, A01B 71/02

(54) **VERFAHREN FÜR DEN BETRIEB EINES LANDWIRTSCHAFTLICHEN GESPANNS**
METHOD FOR OPERATING AN AGRICULTURAL VEHICLE-IMPLEMENT COMBINATION
PROCÉDÉ DE FONCTIONNEMENT D'UNE COMBINAISON VÉHICULE-OUTIL AGRICOLE

(30) Priorität: 10.08.2021 DE 102021120761
(43) Veröffentlichungstag der Anmeldung: 15.02.2023
(73) Patentinhaber: CLAAS Tractor SAS, 78141 Vélizy-Villacoublay Cedex (FR)
(72) Erfinder: Heydekorn, Jens, 33428 Harsewinkel (DE)
(74) Vertreter: CLAAS Gruppe

(56) Entgegenhaltungen:
- EP-A1- 3 498 066
- EP-A1- 3 626 041
- EP-A2- 3 243 367
- EP-A2- 3 243 368
- DE-A1-102016 118 203

## Beschreibung

Die vorliegende Erfindung betrifft ein Verfahren für den Betrieb eines landwirtschaftlichen Gespanns gemäß dem Oberbegriff von Anspruch 1 sowie eine landwirtschaftliche Arbeitsmaschine mit einem Fahrerassistenzsystem zur Durchführung eines solchen Verfahrens gemäß Anspruch 15.

Landwirtschaftliche Arbeitsmaschinen wie Zugmaschinen, insbesondere Traktoren, können mit diversen Anbaugeräten kombiniert werden. Diese Anbaugeräte werden über eine Geräteschnittstelle an die landwirtschaftliche Arbeitsmaschine angebaut. Vorliegend stehen landwirtschaftliche Gespanne mit einer landwirtschaftlichen Arbeitsmaschine und einem landwirtschaftlichen Anbaugerät im Vordergrund, wobei das landwirtschaftliche Anbaugerät insbesondere ein eigenes Fahrzeug sein kann. Dieses wird vorzugsweise von der landwirtschaftlichen Arbeitsmaschine gezogen.

Derartige Anbaugeräte dienen allgemein der Durchführung einer landwirtschaftlichen Arbeitsaufgabe. Im Vordergrund stehen hier Feldbearbeitungen. Bei diesen Feldbearbeitungen kann es sich beispielweise um Aussaat- oder Düngevorgänge handeln, um das Auftragen von Pflanzenschutzmittel, Bodenbearbeitungen wie das Pflügen oder Erntevorgänge wie das Mähen. Diesen Feldbearbeitungen ist gemeinsam, dass die Einstellung von Maschinenparametern der landwirtschaftlichen Arbeitsmaschine und des landwirtschaftlichen Anbaugeräts hohe Anforderungen an den Benutzer stellt, sofern die Feldbearbeitung im Hinblick auf spezifische Optimierungsstrategien hin optimiert werden soll. Eine solche Optimierungsstrategie kann aus mehreren Einzelstrategien bestehen. Beispielweise kann beim Anwendungsfall "Pflügen" eine erste Einzelstrategie die Optimierung der Arbeitsqualität durch die Einstellung einer Arbeitshöhe bzw. -tiefe betreffen, während eine zweite Einzelstrategie die Optimierung der Effizienz, also die Optimierung des Maschinenkraftstoffverbrauchs betrifft.

Das bekannte Verfahren (DE 10 2016 118 205 A1), von dem die Erfindung ausgeht, ist auf den optimierten Betrieb eines landwirtschaftlichen Gespanns ausgerichtet. Dem landwirtschaftlichen Gespann ist ein Fahrerassistenzsystem zugeordnet, das einen Einstellautomaten zur Optimierung der Arbeitsweise der Arbeitsmaschine und des Anbaugeräts bewirkt. Hierfür ist eine Anwendung eines Systemmodells, das die relevanten funktionalen Zusammenhänge des landwirtschaftlichen Gespanns abbildet, auf die aktuelle Betriebssituation, die durch die Messwerte einer Sensoranordnung repräsentiert werden, vorgesehen.

Je nach Optimierungsstrategie ist die Einschätzung der Arbeitsgüte des Einstellautomaten nicht ohne weiteres während des Betriebs möglich. Beispielsweise lässt sich nicht ohne weiteres während des Betriebs ermitteln, ob die Effizienz des landwirtschaftlichen Gespanns im Rahmen der Optimierung tatsächlich angestiegen ist. Es ist beispielsweise denkbar, dass die Messwerte durch eine unzureichende Signalqualität eines Sensors unbrauchbar sind, ohne dass dies während des Betriebs bemerkt wird. Weiter ist es beispielsweise denkbar, dass ein zulässiger Arbeitsbereich eines über einen Stellwert anzusteuernden Aktuators längst überschritten ist, so dass eine weitere Erhöhung des Stellwerts mit keiner weiteren Optimierung verbunden sein kann. Zu dem Zeitpunkt, an dem der Benutzer die unzureichende Arbeitsgüte des Einstellautomaten feststellt, ist es in vielen Fällen für eine Einflussnahme zu spät.

Der Erfindung liegt das Problem zugrunde, das bekannte Verfahren derart auszugestalten und weiter zu bilden, dass während des Betriebs des landwirtschaftlichen Gespanns eine frühzeitige Einschätzung der erreichbaren Arbeitsgüte des Einstellautomaten möglich ist.

Das obige Problem wird bei einem Verfahren gemäß dem Oberbegriff von Anspruch 1 durch die Merkmale des kennzeichnenden Teils von Anspruch 1 gelöst.

Wesentlich ist die grundsätzliche Erkenntnis, dass die erreichbare Arbeitsgüte des Einstellautomaten wesentlich von der Lage des Arbeitspunkts abhängt, den die aktuelle Betriebssituation in dem der Optimierung zugrunde liegenden Systemmodell einnimmt. Ein in Rede stehender Einstellautomat kann nämlich nur dann mit einer hohen Arbeitsgüte betrieben werden, wenn sich die resultierenden Messwerte und Sollwerte in einem sicheren Bereich des modellierten Systems bewegen. Nähert man sich den Grenzen des Systemodells oder überschreitet diese, so kommt es zu einer eingeschränkten oder sogar unzureichenden Arbeitsgüte des Einstellautomaten. Die Arbeitsgüte repräsentiert dabei den Erfolg des Einstellautomaten bei der Umsetzung der jeweiligen Optimierungsstrategie.

Im Einzelnen wird vorgeschlagen, dass mittels des Fahrerassistenzsystems zur Einschätzung der erreichbaren Arbeitsgüte des Einstellautomaten die aktuelle Betriebssituation mit mindestens einem Güteindikator daraufhin bewertet wird, inwieweit die aktuelle Betriebssituation mit ihren Betriebsparametern innerhalb des Systemmodells liegt. Weiter wird vorgeschlagen, dass der mindestens eine Güteindikator oder ein davon abgeleiteter Wert über die Anzeigeeinheit angezeigt wird und/oder an eine Reaktionsroutine des Fahrerassistenzsystems übergeben wird.

Der Güteindikator ist also eine Bewertung der aktuellen Betriebssituation im Hinblick darauf, ob die Betriebssituation die Arbeitsgüte des Einstellautomaten beeinträchtigt oder fördert. Dies wird ganz allgemein daran festgemacht, ob die aktuelle Betriebssituation mit ihren Betriebsparametern vollständig innerhalb des Systemmodells liegt, was unter regelungstechnischen Gesichtspunkten vergleichbar ist mit dem Vorliegen einer Regelreserve. Im anderen Fall, wenn die aktuelle Betriebssituation zumindest zum Teil in einem Grenzbereich des Systemmodells oder gar außerhalb des Systemmodells liegt, lässt sich eine Optimierung basierend auf dem Systemmodell nur eingeschränkt oder gar nicht vornehmen.

Mit der vorschlagsgemäßen Lösung lässt sich die erreichbare Arbeitsgüte des Einstellautomaten also indirekt, nämlich über eine Bewertung der aktuellen Betriebssituation, einschätzen, und zwar unmittelbar während des laufenden Betriebs. Damit kann entsprechend während des laufenden Betriebs auf eine Beeinträchtigung der erreichbaren Arbeitsgüte des Einstellautomaten reagiert werden. Die einfachste Reaktion ist hier die Deaktivierung des Einstellautomaten und die zeitweise manuelle Steuerung bzw. Regelung des landwirtschaftlichen Gespanns.

Das Fahrerassistenzsystem kann grundsätzlich der landwirtschaftlichen Arbeitsmaschine zugeordnet sein. Es kann aber auch verteilt auf die landwirtschaftliche Arbeitsmaschine und das landwirtschaftliche Anbaugerät verteilt sein. Denkbar ist auch, dass das Fahrerassistenzsystem über ein Kommunikationssystem mit der landwirtschaftlichen Arbeitsmaschine und dem landwirtschaftlichen Anbaugerät kommuniziert und insoweit räumlich unabhängig vom landwirtschaftlichen Gespann ist.

Das Systemmodell bildet ganz allgemein funktionale Zusammenhänge des landwirtschaftlichen Gespanns ab. Bei dem Systemmodell kann es sich um eine Sammlung von Informationen, Kennlinienfeldern, Tabellen oder dergleichen handeln. Das Systemmodell kann neben den funktionalen Zusammenhängen auch weitere Informationen umfassen, die der Optimierung der Arbeitsweise der Arbeitsmaschine und/oder des Anbaugeräts dienen können.

Bei dem Güteindikator handelt es sich vorzugsweise um einen Zahlenwert. Andere Repräsentationen des Güteindikators, insbesondere grafische Repräsentationen unter Verwendung von Farbcodierungen wie einer Ampelcodierung (rot, gelb, grün) sind denkbar.

Bei dem Einstellautomaten kann es sich um einen einzigen Automaten handeln, der dem landwirtschaftlichen Gespann insgesamt zugeordnet ist. Es kann aber auch vorteilhaft sein, dass der Einstellautomat zwei oder mehrere Automaten umfasst, die der landwirtschaftlichen Arbeitsmaschine und dem landwirtschaftlichen Anbaugerät zugeordnet sind.

Das Systemmodell kann grundsätzlich im Fahrerassistenzsystem, insbesondere in der landwirtschaftlichen Arbeitsmaschine, gespeichert sein. Alternativ ist es auch denkbar, dass das Systemmodell auf einem vom landwirtschaftlichen Gespann entfernten Server, insbesondere einem Cloud-Server, abgelegt ist.

Die aktuelle Betriebssituation mit ihren Betriebsparametern wird hier und vorzugsweise durch die Messwerte der Sensoranordnung repräsentiert. Die Anwendung des Systemmodells auf die aktuelle Betriebssituation ist daher vorzugsweise mit einer Anwendung des Systemmodells auf die Messwerte verbunden. Grundsätzlich kann die aktuelle Betriebssituation aber auch durch andere Werte, insbesondere durch benutzerseitig eingegebene Werte, repräsentiert werden.

Mit der bevorzugten Ausgestaltung gemäß Anspruch 2 wird unterschieden, ob sich die Betriebsparameter der Betriebssituation lediglich innerhalb vordefinierter Grenzen des Systemmodells oder in einem Abstand zu den vordefinierten Grenzen des Systemmodels befinden. Insoweit kann der mindestens eine Güteindikator auch eine Information darüber enthalten, wie weit die Betriebsparameter der Betriebssituation von den vordefinierten Grenzen des Systemmodells entfernt sind. Damit lässt sich die erreichbare Arbeitsgüte des Einstellautomaten vergleichsweise präzise abschätzen.

Die bevorzugten Ausgestaltungen gemäß den Ansprüchen 3 bis 7 betreffen vorteilhafte Varianten für die Ermittlung des mindestens einen Güteindikators.

Für den Fall gemäß Anspruch 3, in dem das Systemmodell ein Kennlinienfeld umfasst, lässt sich die Lage der Betriebssituation innerhalb des Systemmodells besonders einfach definieren.

Bei der weiter bevorzugten Ausgestaltung gemäß Anspruch 4 geht der Güteindikator darauf zurück, inwieweit die von der Sensoranordnung erzeugten Messwerte innerhalb vordefinierter Grenzen eines Messbereichs liegen. Hier kann berücksichtigt werden, dass Messwerte in der Nähe der betreffenden Grenzen des Messbereichs je nach Sensor von geringer Signalqualität sind oder überhaupt nicht brauchbar sind. Die Signalqualität als solche ist Gegenstand von Anspruch 5. Hier wird offengelassen, wie die Signalqualität im Einzelnen ermittelt wird. Grundsätzlich kann die Signalqualität durch ein Signal-Rausch-Verhältnis oder dergleichen definiert sein.

Bei der weiter bevorzugten Ausgestaltung gemäß Anspruch 6 bildet das Systemmodell vordefinierte Arbeitsbereiche der Maschinenparameter der landwirtschaftlichen Arbeitsmaschine und/oder des landwirtschaftlichen Anbaugeräts ab, so dass der Güteindikator davon abhängt, inwieweit die Stellwerte innerhalb vordefinierter Grenzen des Arbeitsbereichs liegen. Dies betrifft speziell die Ansteuerung von Aktuatoren der landwirtschaftlichen Arbeitsmaschine und/oder des landwirtschaftlichen Anbaugeräts, die bei Überschreiten der vordefinierten Grenzen des Arbeitsbereichs vorzugsweise übersteuert sind und keinen Beitrag zur Optimierung liefern können.

Die Steuer- und/oder Regelgüte des Steuer- und/oder Regelmechanismus des Einstellautomaten ist Gegenstand von Anspruch 7. Hier hängt der Güteindikator davon ab, ob die Steuer- und/oder Regelgüte in einem Akzeptanzbereich liegt. Im Übrigen entsprechen die Begriffe "Steuergüte" und "Regelgüte" dem allgemeinen fachmännischen Verständnis.

Die weiter bevorzugten Ausgestaltungen gemäß den Ansprüchen 8 bis 10 betreffen bevorzugte Varianten für die Darstellung des mindestens einen Güteindikators. Bei der besonders bevorzugten Ausgestaltung gemäß Anspruch 8 wird von mindestens zwei Güteindikatoren nach einer Bewertungsregel ein resultierender Güteindikator abgeleitet, der über die Anzeigeeinheit angezeigt und/oder in einer Reaktionsroutine weiterverarbeitet wird. Damit lässt sich auch eine Mehrzahl von Güteindikatoren auf einfache Weise bei der Einschätzung der Arbeitsgüte des Einstellautomaten berücksichtigen.

Eine besonders intuitive Darstellung des anzuzeigenden Güteindikators besteht gemäß den Ansprüchen 9 und 10 darin, dass mindestens zwei Indikatorbereiche vorgesehen sind, die unterschiedliche Klassen von erreichbaren Arbeitsgüten des Einstellautomaten repräsentieren. Solche Indikatorbereiche können je nach Güteindikator beispielsweise als "Good", "Difficult" und "Fail" bezeichnet sein. Damit lässt sich eine Einordnung des aktuell geltenden Güteindikators, insbesondere bei der grafischen Anzeige gemäß Anspruch 10, besonders schnell durch den Benutzer vornehmen.

Die beiden bevorzugten Alternativen für die Bearbeitung des mindestens einen Güteindikators in der Reaktionsroutine ist Gegenstand von Anspruch 11. Demnach ergibt sich grundsätzlich die Möglichkeiten der Ausgabe einer Warnmeldung, sofern der betreffende Güteindikator einen vordefinierten Grenzwert über- oder unterschreitet. Alternativ oder zusätzlich kann es vorgesehen sein, dass der Einstellautomat zumindest zum Teil deaktiviert wird, so dass vorübergehend eine manuelle Steuerung bzw. Regelung des landwirtschaftlichen Gespanns vorgenommen werden kann.

Die vorschlagsgemäße Lösung kann für eine Vielzahl von landwirtschaftlichen Betriebssituationen und für eine Vielzahl von Optimierungsstrategien eingesetzt werden. Insoweit wird auf die Ansprüche 12 bis 14 verwiesen.

Nach einer weiteren Lehre, der eigenständige Bedeutung zukommt, wird eine landwirtschaftliche Arbeitsmaschine zur Durchführung eines vorschlagsgemäßen Verfahrens als solche beansprucht und auf alle Ausführungen zu dem vorschlagsgemäßen Verfahren darf verwiesen werden.

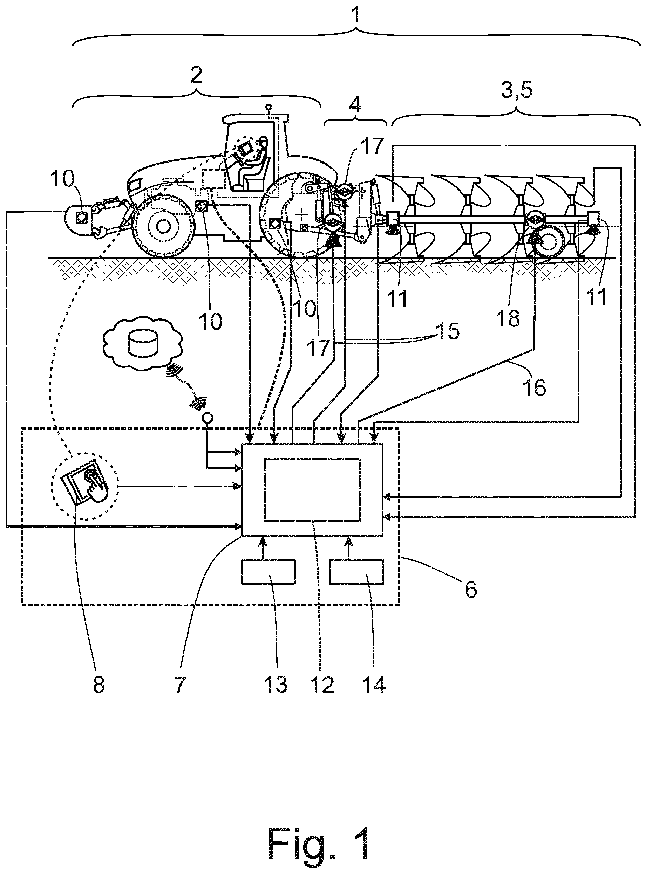

Im Folgenden wird die Erfindung anhand einer lediglich ein Ausführungsbeispiel darstellenden Zeichnung näher erläutert. In der Zeichnung zeigt
- Fig. 1: ein landwirtschaftliches Gespann mit einem Fahrerassistenzsystem in schematischer Darstellung,
- Fig. 2: ein Ablaufdiagramm für einen vorschlagsgemäßen Betrieb des landwirtschaftlichen Gespanns gemäß Fig. 1 und
- Fig. 3: die Anzeigeeinheit des Fahrerassistenzsystems gemäß Fig. 1 bei der Anzeige unterschiedlicher Güteindikatoren gemäß a) und b) und bei der Anzeige eines abgeleiteten Güteindikators gemäß c).

Die vorschlagsgemäße Lösung lässt sich auf einen weiten Bereich landwirtschaftlicher Gespanne 1 anwenden, die eine landwirtschaftliche Arbeitsmaschine 2 und ein landwirtschaftliches Anbaugerät 3 aufweisen.

Bei dem dargestellten und insoweit bevorzugten Ausführungsbeispiel handelt es sich bei der landwirtschaftlichen Arbeitsmaschine 2 um einen Traktor. Die Arbeitsmaschine 2 lässt sich über mindestens eine Geräteschnittstelle 4 mit mindestens einem oben genannten Anbaugerät 3 bestücken. Bei dem Anbaugerät 3 kann es sich um jedwedes Anbaugerät handeln, das in obiger Weise über die Geräteschnittstelle 4 mit der Arbeitsmaschine 2 koppelbar ist. Beispielsweise kann es sich bei dem landwirtschaftlichen Anbaugerät 3 um einen in der Zeichnung dargestellten Pflug, eine Ballenpresse, eine Sämaschine oder dergleichen handeln.

Das landwirtschaftliche Gespann 1 ist mit einem Fahrerassistenzsystem 6 ausgestattet, das eine Recheneinheit 7, eine Anzeigeeinheit 8 und eine Sensoranordnung 9 aufweist. Die Sensoranordnung 9 ist mit mindestens einem Sensor 10, 11, hier und vorzugsweise mit mehreren Sensoren 10, 11 zur Aufnahme von Messwerten ausgestattet. Dabei sind die Sensoren 10 der Arbeitsmaschine 2 und die Sensoren 11 dem Anbaugerät 3 zugeordnet. Bei den Sensoren 10 kann es sich um auf den Antrieb der Antriebsmaschine 2 bezogene Sensoren wie Reifendrucksensoren, Antriebswellensensoren, aber auch um Umfeldsensoren handeln. Bei den Sensoren 11 kann es sich beispielsweise um anbaugerätespezifische Sensoren wie Arbeitstiefensensoren, aber auch um Umfeldsensoren handeln.

Bei dem dargestellten und insoweit bevorzugten Ausführungsbeispiel ist das Fahrerassistenzsystem 6 in erster Linie der Arbeitsmaschine 2 zugeordnet. Das realisiert sich dadurch, dass die Recheneinheit 7 und die Anzeigeeinheit 8 in der Arbeitsmaschine 2 angeordnet sind. Lediglich die Sensoren 11 des Fahrerassistenzsystems 6 sind am Anbaugerät 3 angeordnet. Grundsätzlich kann das Fahrerassistenzsystem 6 aber auch anderweitig auf die Arbeitsmaschine 2 und das Anbaugerät 3 verteilt sein. Schließlich ist es denkbar, dass das Fahrerassistenzsystem 6 entfernt von dem landwirtschaftlichen Gespann 1 angeordnet ist und über eine Kommunikationsverbindung mit dem Gespann 1 kommuniziert.

Das Fahrerassistenzsystem 6 stellt einen Einstellautomaten 12 bereit, der nach mindestens einer Optimierungsstrategie 13 unter Anwendung eines Systemmodells 14 auf die aktuelle Betriebssituation fortlaufend eine Optimierung der Arbeitsweise der Arbeitsmaschine 2 und/oder des Anbaugeräts 3 bewirkt und Stellwerte 15, 16 für Maschinenparameter an die landwirtschaftliche Arbeitsmaschine 2 und/oder das landwirtschaftliche Anbaugerät 3 übergibt. Diese Funktion des Einstellautomaten 12 wird maßgeblich von der Recheneinheit 7 übernommen.

Für Einzelheiten zu dem Einstellautomaten 12 darf auf die deutsche Patentanmeldung DE 10 2016 118 205 A1 verwiesen werden, die auf die Anmelderin zurückgeht.

Das Systemmodell 14 ist bei dem dargestellten und insoweit bevorzugten Ausführungsbeispiel dem Fahrerassistenzsystem 6 zugeordnet. Grundsätzlich kann das Systemmodell 14 auch auf einem entfernten Server, insbesondere auf einem Cloud-Server, gespeichert sein. Das Systemmodell 14 bildet funktionale Zusammenhänge des landwirtschaftlichen Gespanns 1 ab. Es kann darüber hinaus weitere Informationen umfassen, wie weiter oben angedeutet wurde.

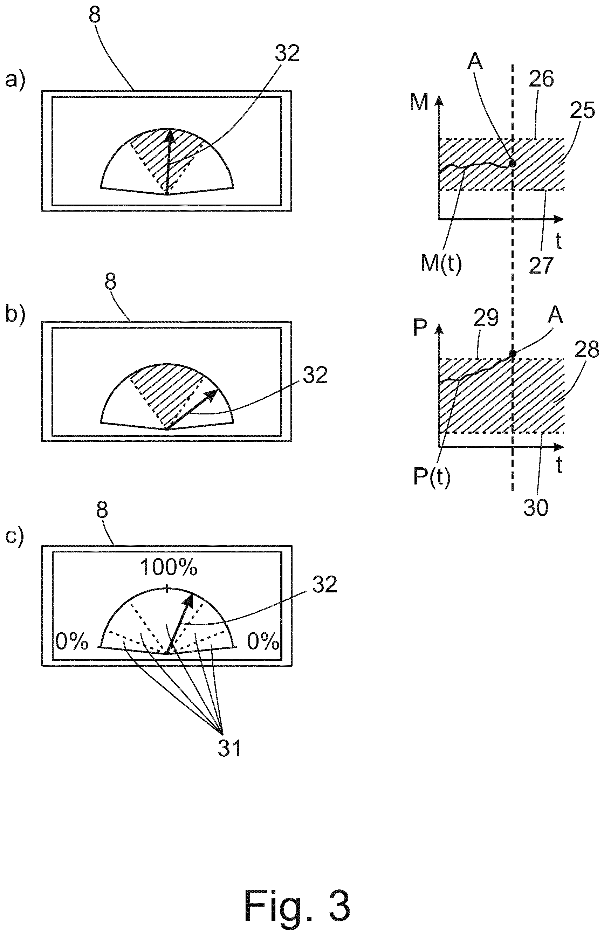

Wesentlich ist nun, dass mittels des Fahrerassistenzsystems 6 zur Einschätzung der erreichbaren Arbeitsgüte des Einstellautomaten 12 die aktuelle Betriebssituation B mit mindestens einem Güteindikator Gᵢ daraufhin bewertet wird, inwieweit die aktuelle Betriebssituation B mit ihren Betriebsparametern Bᵢ innerhalb des Systemmodells 14 liegt. Die Betriebsparameter Bᵢ dienen der Beschreibung der Betriebssituation B und entsprechen zum Teil, wie noch erläutert wird, ausgewählten, von der Sensoranordnung 9 erzeugten Messwerten M. In Abhängigkeit von den Werten der Betriebsparameter Bᵢ ergibt sich im Systemmodell 14 ein Arbeitspunkt, der in Fig. 3 mit dem Bezugszeichen A angedeutet ist. Aus dieser Darstellung gemäß Fig. 3 lässt sich entnehmen, dass der Arbeitspunkt A, der die aktuelle Betriebssituation repräsentiert, ohne weiteres innerhalb vordefinierter Grenzen des Systemmodells 14 oder außerhalb vordefinierter Grenzen des Systemmodells 14 liegen kann.

Um eine hohe Arbeitsgüte des Einstellautomaten 12 erreichen zu können, wird vorschlagsgemäß davon ausgegangen, dass sich der Arbeitspunkt A und damit die aktuelle Betriebssituation B mit ihren Betriebsparametern Bᵢ innerhalb des Systemmodells 14 befinden muss. Dann wird dem Güteindikator Gᵢ ein entsprechend hoher Wert zugewiesen.

Dem Güteindikator Gᵢ sind in Fig. 3 auf der linken Seite Werte auf einer Skala zwischen 0 und 100 % zugeordnet. Damit lässt sich der mindestens eine Güteindikator Gᵢ oder ein noch zu erläuternder, davon abgeleiteter Indikator gᵢ leicht über die Anzeigeeinheit 8, hier zeigerbasiert, anzeigen. Alternativ oder zusätzlich kann der mindestens eine Güteindikator Gᵢ an eine noch zu erläuternde Reaktionsroutine 19 des Fahrerassistenzsystems 6 übergeben werden.

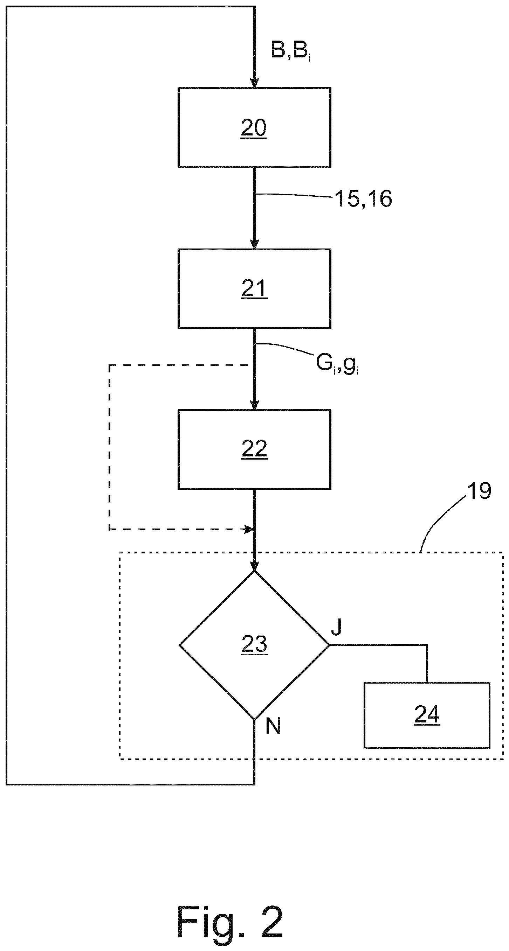

Den grundsätzlichen Ablauf des vorschlagsgemäßen Verfahrens zeigt Fig. 2. In einer Optimierungsroutine 20 findet die Optimierung der Arbeitsweise der Arbeitsmaschine 1 und/oder des Anbaugeräts 3 mittels des Einstellautomaten 12 statt, in der Stellwerte 15, 16 für Maschinenparameter an die landwirtschaftliche Arbeitsmaschine 1 und/oder das landwirtschaftliche Anbaugerät 3 übergeben werden. Anschließend oder gleichzeitig findet in einer Bewertungsroutine 21 die Bewertung der aktuellen Betriebssituation B mit dem mindestens einen Güteindikator Gᵢ statt. Der mindestens eine Güteindikator Gᵢ oder ein davon abgeleiteter Indikator g; wird in einer Anzeigeroutine 22 angezeigt. Alternativ oder zusätzlich wird der mindestens eine Güteindikator Gᵢ oder der davon abgeleitete Indikator g; an die Reaktionsroutine 19 des Fahrerassistenzsystems 6 übergeben. Sofern noch zu erläuternde Voraussetzungen erfüllt sind, die zur Einschätzung einer unzureichenden Arbeitsgüte des Einstellautomaten 12 führen, folgt auf eine Abfrage 23 eine Deaktivierungsroutine 24, mit der der Einstellautomat 12 deaktiviert, insbesondere abgeschaltet wird. Andernfalls wird die fortlaufende Optimierung in der Optimierungsroutine 20 fortgesetzt.

Wie weiter oben angedeutet, sind dem Systemmodell 14 vorzugsweise vordefinierte Grenzen des Systemmodells 14 zugeordnet, innerhalb derer eine Optimierung basierend auf dem Systemmodell 14 möglich ist. Entsprechend ist es vorzugsweise so, dass der Güteindikator Gᵢ oder einer der Güteindikatoren Gᵢ davon abhängt, inwieweit die Betriebsparameter Bᵢ der Betriebssituation B innerhalb der vordefinierten Grenzen des Systemmodells 14 liegen. In besonders bevorzugter Ausgestaltung betrifft der Güteindikator Gᵢ oder einer der Güteindikatoren Gᵢ einen Abstand der Betriebsparameter B; der Betriebssituation B zu den vordefinierten Grenzen des Systemmodells 14. Dabei sinkt der Güteindikator Gᵢ mit absinkendem Abstand entsprechend ab, denn es wird davon ausgegangen, dass das Systemmodell 14 im Bereich der vordefinierten Grenzen des Systemmodells 14 wegen eventuellen Nichtlinearitäten, Übersteuerungseffekten oder dergleichen nur eingeschränkt als Basis für die Optimierung durch den Einstellautomaten 12 herangezogen werden kann.

In bevorzugter Ausgestaltung umfasst das Systemmodell 14 ein Kennlinienfeld mit Eingangsparametern und Ausgangsparametern zur Abbildung eines der funktionalen Zusammenhänge des landwirtschaftlichen Gespanns 1. Ein solches Kennlinienfeld kann mehrdimensional vorliegen und neben den mechanischen und steuerungstechnischen Aspekten des landwirtschaftlichen Gespanns 1 auch einen Teil der landwirtschaftlichen Arbeitsaufgabe abbilden.

Die Betriebsparameter Bᵢ der Betriebssituation B umfassen dann die Eingangsparameter und/oder Ausgangsparameter des Kennlinienfelds, wovon sich ableiten lässt, ob sich die Betriebssituation B innerhalb oder außerhalb des Systemmodells 14 befindet. Der Güteindikator Gᵢ oder einer der Güteindikatoren Gᵢ hängt hier davon ab, inwieweit der betreffende Betriebsparameter Bᵢ innerhalb vordefinierter Grenzen des Kennlinienfelds liegt. Diese Grenzen werden vorzugsweise derart definiert, dass innerhalb dieser Grenzen eine hinreichende Arbeitsgüte des Einstellautomaten 12 zu erwarten ist. In besonders bevorzugter Ausgestaltung betrifft der Güteindikator Gᵢ oder einer der Güteindikatoren Gᵢ einen Abstand der betreffenden Betriebsparameter Bᵢ zu den vordefinierten Grenzen des Kennlinienfelds. Dabei ist es entsprechend so, dass der Güteindikator Gᵢ mit absinkendem Abstand entsprechend absinkt.

Fig. 3a) und Fig. 3b) zeigen jeweils auf der rechten Seite einen Teil des Systemmodells 14. Bei der Darstellung gemäß Fig. 3a) bildet das Systemmodell 14 einen Messbereich 25 des Sensors 10, 11 oder einer der Sensoren 10, 11 der Sensoranordnung 9 ab. Beispielhaft sind hier Messwerte M des betreffenden Sensors 10, 11 über der Zeit t aufgetragen. Der Messbereich 25 ist schraffiert dargestellt.

Die Betriebsparameter Bᵢ der Betriebssituation B umfassen die von der Sensoranordnung 9 erzeugten Messwerte M, wobei der Güteindikator Gᵢ oder einer der Güteindikatoren Gᵢ davon abhängt, inwieweit die Messwerte M innerhalb vordefinierter Grenzen 26, 27 des Messbereichs 25 liegen. In besonders bevorzugter Ausgestaltung ist es so, dass der Güteindikator Gᵢ oder einer der Güteindikatoren Gᵢ einen Abstand der Messwerte M zu den vordefinierten Grenzen 26, 27 des Messbereichs 25 betrifft. In besonders bevorzugter Ausgestaltung sinkt der Güteindikator Gᵢ auch hier mit absinkendem Abstand entsprechend.

Der obige Abstand zu den vordefinierten Grenzen 26, 27 des Messbereichs 25 lässt sich auf unterschiedliche Weise definieren. Bei dem in Fig. 3 dargestellten und insoweit bevorzugten Ausführungsbeispiel ist der Abstand ein Maß dafür, inwieweit sich der resultierende Anhaltspunkt in der Mitte zwischen den beiden vordefinierten Grenzen 26, 27 des Messbereichs 25 befindet.

Das Systemmodell 14 ist nicht auf die Abbildung funktionaler Zusammenhänge des landwirtschaftlichen Gespanns 1 beschränkt. Es kann Bereiche beliebiger Variablen enthalten, die beispielsweise eine hohe Arbeitsgüte des Einstellautomaten 12 erwarten lassen. In diesem Sinne bildet das Systemmodell 14 vorzugsweise einen Akzeptanzbereich für eine Signalqualität des mindestens einen Sensors 10, 11 der Sensoranordnung 9 ab, wobei auch hier die Betriebsparameter Bᵢ der Betriebssituation B die von der Sensoranordnung 9 erzeugten Messwerte umfassen und wobei der Güteindikator Gᵢ oder einer der Güteindikatoren Gᵢ davon abhängt, inwieweit die den Messwerten zugeordnete Signalqualität innerhalb vorbestimmter Grenzen des Akzeptanzbereichs liegt. Dies trägt dem Umstand Rechnung, dass insbesondere eine regelbasierte Optimierung durch den Einstellautomaten 12 nur mit Messwerten machbar ist, die auf eine hinreichende Signalqualität zurückgehen. Der Güteindikator Gᵢ oder einer der Güteindikatoren Gᵢ betrifft dann vorzugsweise einen Abstand der den Messwerten zugeordneten Signalqualität zu den vordefinierten Grenzen des Akzeptanzbereichs. Dabei sinkt der Güteindikator Gᵢ vorzugsweise mit absinkendem Abstand entsprechend.

Das Systemmodell 14 kann grundsätzlich auch Betriebsbereiche einzelner Komponenten wie Aktuatoren 17, 18 oder dergleichen abbilden. Bei den Aktuatoren 17, 18 kann es sich beispielsweise um Stellglieder in Form von hydraulischen oder elektrischen Linearaktuatoren, um hydraulische oder elektrische Stellmotoren oder dergleichen handeln, die insbesondere der Geräteschnittstelle 4 der Arbeitsmaschine 2 zugeordnet sein können und dem Anheben und Absenken des Anbaugeräts 3 dienen. Weiter kann es sich bei den Aktuatoren 17, 18 beispielsweise um Stellglieder des Anbaugeräts 3 selbst, hier und vorzugsweise zur Einstellung der Pflugkonfiguration, handeln.

Ganz allgemein ist es vorzugsweise so, dass das Systemmodell 14 Arbeitsbereiche 28 der Maschinenparameter abbildet, zu denen der Einstellautomat 12 entsprechende Stellwerte 15, 16 erzeugt. Dies ist in Fig. 3b) rechts dargestellt, indem ein solcher Maschinenparameter P über der Zeit t aufgetragen ist. Der Arbeitsbereich 28 ist hier schraffiert dargestellt.

Hier und vorzugsweise umfassen die Betriebsparameter Bᵢ der Betriebssituation B die vom Einstellautomaten 12 an die landwirtschaftliche Arbeitsmaschine 2 und/oder an das landwirtschaftliche Anbaugerät 3 übergebenen Stellwerte 15, 16 für die betreffenden Maschinenparameter P der Aktuatoren 17, 18 oder dergleichen, wobei der Güteindikator Gᵢ oder einer der Güteindikatoren Gᵢ davon abhängt, inwieweit die Stellwerte 15, 16 innerhalb vordefinierter Grenzen 29, 30 der Arbeitsbereiche 28 liegen. Auch hier ist es vorzugsweise vorgesehen, dass der Güteindikator Gᵢ oder einer der Güteindikatoren Gᵢ einen Abstand der Stellwerte 15, 16 zu den vordefinierten Grenzen 29, 30 der Arbeitsbereiche 28 betrifft, wobei auch hier, vorzugsweise, der Güteindikator Gᵢ mit absinkendem Abstand entsprechend absinkt.

Für zumindest einen Teil der Optimierungsaufgaben ist es bevorzugt, dass der Einstellautomat 12 mindestens einen Steuer- und/oder Regelmechanismus umfasst, mittels dessen die an die landwirtschaftliche Arbeitsmaschine 2 und/oder an das landwirtschaftliche Anbaugerät 3 zu übergebenden Stellwerte 15, 16 für die Aktuatoren 1 erzeugt werden.

In diesem Zusammenhang repräsentiert die Steuer- bzw. Regelgüte die Qualität der Steuerung bzw. Regelung. Insbesondere für die Regelgüte existieren hierfür standardisierte Bewertungsmethoden, die ganz allgemein neben statischen Kriterien wie die Regelgenauigkeit auch dynamische Kriterien wie die Schnelligkeit des Ausregelns von Regelabweichungen betreffen. Entsprechend ist es in einer bevorzugten Ausgestaltung vorgesehen, dass das Systemmodell 14 einen Akzeptanzbereich für eine Steuer- bzw. Regelgüte des Steuer- bzw. Regelmechanismus des Einstellautomaten 12 abbildet. Dabei umfassen die Betriebsparameter Bᵢ der Betriebssituation die Eingangs- und Ausgangsgrößen der Steuer- und/oder Regelmechanismen.

Der Güteindikator Gᵢ oder eine der Güteindikatoren Gᵢ hängt davon ab, inwieweit die Steuer- bzw. Regelgüte des Steuer- bzw. Regelmechanismus des Einstellautomaten innerhalb vordefinierter Grenzen des Akzeptanzbereichs liegt. Auch hier ist es so, dass der Güteindikator Gᵢ oder einer der Güteindikatoren Gᵢ einen Abstand der Steuer- bzw. Regelgüte des Steuer- bzw. Regelmechanismus des Einstellautomaten 12 zu den Grenzen des Akzeptanzbereichs betrifft, wobei der Güteindikator Gᵢ mit absinkendem Abstand vorzugsweise entsprechend absinkt.

Eine einfache Möglichkeit der Berücksichtigung zahlreicher Güteindikatoren Gᵢ besteht darin, dass mindestens zwei, vorzugsweise mehr als zwei, Güteindikatoren Gᵢ ermittelt werden und dass von den Güteindikatoren Gᵢ nach einer Bewertungsregel ein resultierender Güteindikator gᵢ abgeleitet wird, der über die Anzeigeeinheit 8 angezeigt und/oder an die Reaktionsroutine 19 des Fahrerassistenzsystems 6 übergeben wird. Die Bewertungsregel kann logische Verknüpfungen und/oder mathematische Operationen umfassen, um auf deren Basis der resultierende Güteindikator gᵢ abgeleitet wird. Fig. 3c) zeigt den resultierenden Güteindikator gᵢ, der durch eine, hier und vorzugsweise gewichtete, Mitteilung der in Fig. 3a) und Fig. 3b) angezeigten Güteindikatoren Gᵢ. Grundsätzlich kann der betreffende Güteindikator Gᵢ in Zahlenwerten angezeigt werden, wie in Fig. 3c) für den abgeleiteten Güteindikator gᵢ gezeigt ist. Alternativ oder zusätzlich ist es allerdings vorgesehen, dass dem betreffenden Güteindikator Gᵢ mindestens zwei Indikatorbereiche 31 zugeordnet sind, die unterschiedliche Klassen von erreichbaren Arbeitsgüten des Einstellautomaten 12 repräsentieren. Dabei wird der betreffende Güteindikator Gᵢ vorzugsweise innerhalb des dem Güteindikator Gᵢ zugeordneten Indikatorbereichs 31 angezeigt. Alternativ wird allein der zugeordnete Indikatorbereich 31 angezeigt, was sich mit einer besonders einfachen Anzeigeeinheit 8 umsetzbar ist.

Vorzugsweise sind dem anzuzeigenden Güteindikator Gᵢ zumindest die Indikatorbereiche "Good", "Difficult" und "Fail" zugeordnet, die den Klassen "Hohe Arbeitsgüte", "Mittlere Arbeitsgüte" und "Unzureichende Arbeitsgüte" zugeordnet sind. Dabei sinkt der Güteindikator Gᵢ vom Indikatorbereich "Good" über den Indikatorbereich "Difficult" zum Indikatorbereich "Fail" ab.

Bei der Anzeigeeinheit 8 handelt es sich vorzugsweise um eine grafische Anzeige, weiter vorzugsweise um eine Touch-Screen-Anzeige, in der der anzuzeigende Güteindikator Gᵢ durch ein grafisches Element, hier und vorzugsweise durch den Zeiger 32, innerhalb der grafisch dargestellten Indikatorbereiche 31 oder eben nur durch eine grafische Anzeige des zugeordneten Indikatorbereichs 31 angezeigt wird. Andere Varianten für die Realisierung der Anzeige des Güteindikators Gᵢ sind denkbar.

Für die Umsetzung der Reaktionsroutine 19, sind, wie oben angesprochen, ebenfalls unterschiedliche vorteilhafte Varianten denkbar. In besonders bevorzugter Ausgestaltung wird im Rahmen der Reaktionsroutine 19 der mindestens eine Güteindikator G; oder ein davon abgeleiteter Güteindikator Gᵢ auf das Einhalten eines vorbestimmten Grenzwerts überprüft. Bei negativem Ergebnis wird eine Warnmeldung über die Anzeigeeinheit 8 ausgegeben und/oder der Einstellautomat 12 zumindest zum Teil deaktiviert.

Die vorschlagsgemäße Lösung lässt sich auf den Betrieb jedweden landwirtschaftlichen Gespanns 1 anwenden. Beispielsweise kann die landwirtschaftliche Betriebssituation einen Erntevorgang betreffen. Hier und vorzugsweise umfasst die landwirtschaftliche Betriebssituation eine Bodenbearbeitung, insbesondere ein Pflügen. Alternativ oder zusätzlich kann es sich bei der Bodenbearbeitung beispielsweise um einen Sävorgang und/oder einen Pflanzenschutzvorgang und/oder einen Düngevorgang und/oder einen Spritzvorgang und/oder einen Wässerungsvorgang handeln.

Auch für die Optimierungsstrategien sind verschiedene Varianten denkbar, die jeweils für sich genommen oder in Kombination Anwendung finden können. Entsprechend umfasst die mindestens eine Optimierungsstrategie 13 eine oder mehrere der Einzelstrategien "Arbeitshöhe bzw. -tiefe", "Stoppelbearbeitung", "Bodenlockerung", "Ebenheit", "Durchmischung", "Saatbettbereitung", "Krümelung" und "Rückverfestigung". Schließlich ist es so, dass mindestens eine Optimierungsstrategie 13 eine oder mehrere der Einzelstrategien "Effizienz", "Leistung", "Arbeitsqualität", "Balance", "Bodenschonung", "Komfort" und "Benutzerdefiniert" umfasst.

Im Hinblick auf Einzelheiten zu den Anwendungsbereichen und den Optimierungsstrategien 13 darf wieder auf die DE 10 2016 188 205 A1 verwiesen werden.

Vorgeschlagen wird außerdem gemäß einer weiteren Lehre, der eigenständige Bedeutung zukommt, eine landwirtschaftliche Arbeitsmaschine 2 mit einem Fahrerassistenzsystem 6 zur Durchführung eines vorschlagsgemäßen Verfahrens. Dabei wird, anders als oben angegeben, davon ausgegangen, dass das Fahrerassistenzsystem 6 ausschließlich der landwirtschaftlichen Arbeitsmaschine 2 zugeordnet ist. Im Übrigen darf auf alle obigen Ausführungen, die geeignet sind, die landwirtschaftliche Arbeitsmaschine 2 mit dem Fahrerassistenzsystem 6 zu beschreiben, verwiesen werden.

### Bezugszeichenliste

- 1: Gespann
- 2: Antriebsmaschine
- 3: Anbaugerät
- 4: Geräteschnittstelle
- 5: Pflug
- 6: Fahrerassistenzsystem
- 7: Recheneinheit
- 8: Anzeigeeinheit
- 9: Sensoranordnung
- 10: Sensor Arbeitsmaschine
- 11: Sensor Anbaugerät
- 12: Einstellautomat
- 13: Optimierungsstrategie
- 14: Systemmodell
- 15: Stellwert Arbeitsmaschine
- 16: Stellwert Anbauberät
- 17: Aktuator Arbeitsmaschine
- 18: Aktuator Anbaugerät
- 19: Reaktionsroutine
- 20: Optimierungsroutine
- 21: Bewertungsroutine
- 22: Anzeigeroutine
- 23: Abfrage
- 24: Reaktionsroutine
- 25: Messbereich
- 26: Grenze Messbereich
- 27: Grenze Messbereich
- 28: Arbeitsbereich
- 29: Grenze Arbeitsbereich
- 30: Grenze Arbeitsbereich
- 31: Indikatorbereich
- 32: Zeiger
- A: Arbeitspunkt
- B: Betriebssituation
- Bᵢ: Betriebsparameter
- Gᵢ: Güteindikator
- gᵢ: abgeleiteter Güteindikator
- M: Messwert

## Patentansprüche

1. Verfahren für den Betrieb eines landwirtschaftlichen Gespanns (1), wobei das landwirtschaftliche Gespann (1) eine landwirtschaftliche Arbeitsmaschine (2), ein landwirtschaftliches Anbaugerät (3) und ein Fahrerassistenzsystem (6) mit einer Recheneinheit (7), einer Anzeigeeinheit (8) und einer Sensoranordnung (9) aufweist, wobei die Sensoranordnung (9) mindestens einen Sensor (10, 11) zur Aufnahme von Messwerten aufweist,
wobei das Fahrerassistenzsystem (6) einen Einstellautomaten (12) bereitstellt, der nach mindestens einer Optimierungsstrategie (13) unter Anwendung eines Systemmodells (14) auf die aktuelle Betriebssituation (B) fortlaufend eine Optimierung der Arbeitsweise der Arbeitsmaschine (2) und/oder des Anbaugeräts (3) bewirkt und Stellwerte (15, 16) für Maschinenparameter an die landwirtschaftliche Arbeitsmaschine (2) und/oder das landwirtschaftliche Anbaugerät (3) übergibt, wobei das Systemmodell (14) funktionale Zusammenhänge des landwirtschaftlichen Gespanns (1) abbildet,
**dadurch gekennzeichnet,**
**dass** mittels des Fahrerassistenzsystems (6) zur Einschätzung der erreichbaren Arbeitsgüte des Einstellautomaten (12) die aktuelle Betriebssituation (B) mit mindestens einem Güteindikator (Gᵢ) daraufhin bewertet wird, inwieweit die aktuelle Betriebssituation (B) mit ihren Betriebsparametern (Bᵢ) innerhalb des Systemmodells (14) liegt und dass der mindestens eine Güteindikator (Gᵢ)oder ein davon abgeleiteter Indikator (gᵢ) über die Anzeigeeinheit (8) angezeigt und/oder an eine Reaktionsroutine (19) des Fahrerassistenzsystems (6) übergeben wird.

2. Verfahren nach Anspruch 1, **dadurch gekennzeichnet, dass** der Güteindikator (Gᵢ) oder einer der Güteindikatoren (Gᵢ) davon abhängt, inwieweit die Betriebsparameter (Bᵢ) der Betriebssituation (B) innerhalb vordefinierter Grenzen (S) des Systemmodells (14) liegen, vorzugsweise, dass der Güteindikator (Gᵢ) oder einer der Güteindikatoren (Gᵢ) einen Abstand der Betriebsparameter (Bᵢ) der Betriebssituation (B) zu den vordefinierten Grenzen (S) des Systemmodells (14) betrifft, vorzugsweise, dass der Güteindikator (Gᵢ) mit absinkendem Abstand entsprechend absinkt.

3. Verfahren nach Anspruch 1 oder 2, **dadurch gekennzeichnet, dass** das Systemmodell (14)ein Kennlinienfeld mit Eingangsparametern und Ausgangsparametern zur Abbildung eines der funktionalen Zusammenhänge des landwirtschaftlichen Gespanns (1) umfasst, dass die Betriebsparameter (Bᵢ) der Betriebssituation (B) die Eingangsparameter und/oder Ausgangsparameter umfassen und dass der Güteindikator (Gᵢ) oder einer der Güteindikatoren (Gᵢ) davon abhängt, inwieweit der betreffende Betriebsparameter (Bᵢ) innerhalb vordefinierter Grenzen des Kennlinienfelds liegt, vorzugsweise, dass der Güteindikator (Gᵢ) oder einer der Güteindikatoren (Gᵢ) einen Abstand der betreffenden Betriebsparameter (Bⱼ) zu den vordefinierten Grenzen des Kennlinienfelds betrifft, weiter vorzugsweise, dass der Güteindikator (Gᵢ) mit absinkendem Abstand entsprechend absinkt.

4. Verfahren nach einem der vorhergehenden Ansprüche, **dadurch gekennzeichnet, dass** das Systemmodell (14) einen Messbereich (25) des Sensors (10, 11) oder einer der Sensoren (10, 11) der Sensoranordnung (9) abbildet, dass die Betriebsparameter (Bᵢ) der Betriebssituation (B) die von der Sensoranordnung (9) erzeugten Messwerte (M) umfassen und dass der Güteindikator (Gᵢ) oder einer der Güteindikatoren (Gᵢ) davon abhängt, inwieweit die Messwerte (M) innerhalb vordefinierter Grenzen (26, 27) des Messbereichs (25) liegen, vorzugsweise, dass der Güteindikator (Gᵢ) oder einer der Güteindikatoren (Gᵢ) einen Abstand der Messwerte (M) zu den vordefinierte Grenzen (26, 27) des Messbereichs (25) betrifft, weiter vorzugsweise, dass der Güteindikator (Gᵢ) mit absinkendem Abstand entsprechend absinkt.

5. Verfahren nach einem der vorhergehenden Ansprüche, **dadurch gekennzeichnet, dass** das Systemmodell (14) einen Akzeptanzbereich für eine Signalqualität des mindestens einen Sensors (10, 11) der Sensoranordnung (9) abbildet, dass die Betriebsparameter (Bᵢ) der Betriebssituation (B) die von der Sensoranordnung (9) erzeugten Messwerte (M) umfassen und dass der Güteindikator (Gᵢ) oder einer der Güteindikatoren (Gᵢ) davon abhängt, inwieweit die den Messwerten zugeordnete Signalqualität innerhalb vordefinierter Grenzen des Akzeptanzbereichs liegt, vorzugsweise, dass der Güteindikator (Gᵢ) oder einer der Güteindikatoren (Gᵢ) einen Abstand der den Messwerten (M) zugeordneten Signalqualität zu den vordefinierten Grenzen des Akzeptanzbereichs betrifft, weiter vorzugsweise, dass der Güteindikator (Gᵢ) mit absinkendem Abstand entsprechend absinkt.

6. Verfahren nach einem der vorhergehenden Ansprüche, **dadurch gekennzeichnet, dass** das Systemmodell (14) Arbeitsbereiche (28) der Maschinenparameter abbildet, dass die Betriebsparameter (Bᵢ) der Betriebssituation (B) die vom Einstellautomaten (12) an die landwirtschaftliche Arbeitsmaschine (2) und/oder das landwirtschaftliche Anbaugerät (3) übergebenen Stellwerte (15, 16) für Maschinenparameter umfasst und dass der Güteindikator (Gᵢ) oder einer der Güteindikatoren (Gᵢ) davon abhängt, inwieweit die Stellwerte (15, 16) innerhalb vordefinierter Grenzen (29, 30) der Arbeitsbereiche (28) liegen, vorzugsweise, dass der Güteindikator (Gᵢ) oder einer der Güteindikatoren (Gᵢ) einen Abstand der Stellwerte (15, 16) zu den vordefinierten Grenzen (29, 30) der Arbeitsbereiche (28) betrifft, weiter vorzugsweise, dass der Güteindikator (Gᵢ) mit absinkendem Abstand entsprechend absinkt.

7. Verfahren nach einem der vorhergehenden Ansprüche, **dadurch gekennzeichnet, dass** der Einstellautomat (12) mindestens einen Steuer- und/oder Regelmechanismus umfasst, mittels dessen die an die landwirtschaftliche Arbeitsmaschine (2) und/oder an das landwirtschaftliche Anbaugerät (3) zu übergebenden Stellwerte (15, 16) erzeugt werden, dass das Systemmodell (14) einen Akzeptanzbereich für eine Steuer- bzw. Regelgüte des Steuer- bzw. Regelmechanismus des Einstellautomaten (12) abbildet, dass die Betriebsparameter (Bᵢ) der Betriebssituation (B) die Eingangs- und Ausgangsgrößen der Steuer- und/oder Regelmechanismen umfasst und dass der Güteindikator (Gᵢ) oder einer der Güteindikatoren (Gᵢ) davon abhängt, inwieweit die Steuer- bzw. Regelgüte des Steuer- bzw. Regelmechanismus des Einstellautomaten (12) innerhalb vordefinierter Grenzen des Akzeptanzbereichs liegt, vorzugsweise, dass der Güteindikator (Gᵢ) oder einer der Güteindikatoren (Gᵢ) einen Abstand der Steuer- bzw. Regelgüte des Steuer- bzw. Regelmechanismus des Einstellautomaten (12) zu den Grenzen des Akzeptanzbereichs betrifft, weiter vorzugsweise, dass der Güteindikator (Gᵢ) mit absinkendem Abstand entsprechend absinkt.

8. Verfahren nach einem der vorhergehenden Ansprüche, **dadurch gekennzeichnet, dass** mindestens zwei, vorzugsweise mehr als zwei, Güteindikatoren (Gᵢ) ermittelt werden und dass von den Güteindikatoren (Gᵢ) nach einer Bewertungsregel ein resultierender Güteindikator (gᵢ) abgeleitet wird, der über die Anzeigeeinheit (8) angezeigt und/oder an eine Reaktionsroutine (19) des Fahrerassistenzsystems (6) übergeben wird, vorzugsweise, dass die Bewertungsregel eine, insbesondere gewichtete, Mittelung der Güteindikatoren (Gᵢ) umfasst.

9. Verfahren nach einem der vorhergehenden Ansprüche, **dadurch gekennzeichnet, dass** dem anzuzeigenden Güteindikator (Gᵢ) mindestens zwei Indikatorbereiche (31) zugeordnet sind, die unterschiedliche Klassen von erreichbaren Arbeitsgüten des Einstellautomaten (12) repräsentieren und dass der anzuzeigende Güteindikator (Gᵢ) innerhalb der Indikatorbereiche (31) oder durch eine Anzeige nur des dem anzuzeigenden Güteindikator (Gᵢ) zugeordneten Indikatorbereichs (31) angezeigt wird, vorzugsweise, dass dem anzuzeigenden Güteindikator (Gᵢ) zumindest die Indikatorbereiche "Good", "Difficult" und "Fail" zugeordnet sind, wobei der Güteindikator (Gᵢ) vom Indikatorbereich "Good" über den Indikatorbereich "Difficult" zum Indikatorbereich "Fail" absinkt.

10. Verfahren nach Anspruch 9, **dadurch gekennzeichnet, dass** die Anzeigeeinheit (8) eine grafische Anzeige aufweist, in der der anzuzeigende Güteindikator (Gᵢ) durch ein grafisches Element, insbesondere durch einen Zeiger (32), innerhalb der grafisch dargestellten Indikatorbereiche (31) oder durch eine grafische Anzeige des relevanten Indikatorbereichs (31) angezeigt wird.

11. Verfahren nach einem der vorhergehenden Ansprüche, **dadurch gekennzeichnet, dass** im Rahmen der Reaktionsroutine (19) der mindestens eine Güteindikator (Gᵢ) oder ein davon abgeleiteter Güteindikator (Gᵢ) auf das Einhalten eines vordefinierten Grenzwerts überprüft wird und bei negativem Ergebnis eine Warnmeldung über die Anzeigeeinheit (8) ausgegeben wird und/oder der Einstellautomat (12) zumindest zum Teil deaktiviert wird.

12. Verfahren nach einem der vorhergehenden Ansprüche, **dadurch gekennzeichnet, dass** die landwirtschaftliche Betriebssituation (B) einen Erntevorgang und/oder eine Bodenbearbeitung, insbesondere ein Pflügen und/oder einen Sävorgang und/oder einen Pflanzenschutzvorgang und/oder einen Düngevorgang und/oder einen Spritzvorgang und/oder einen Wässerungsvorgang umfasst.

13. Verfahren nach einem der vorhergehenden Ansprüche, **dadurch gekennzeichnet, dass** die mindestens eine Optimierungsstrategie (13) eine oder mehrere der Einzelstrategien "Arbeitshöhe bzw. -tiefe", "Stoppelbearbeitung", "Bodenlockerung", "Ebenheit", "Durchmischung", "Saatbettbereitung", "Krümelung" und "Rückverfestigung" umfasst.

14. Verfahren nach einem der vorhergehenden Ansprüche, **dadurch gekennzeichnet, dass** die mindestens eine Optimierungsstrategie (13) eine oder mehrere der Einzelstrategien "Effizienz", "Leistung", "Arbeitsqualität", "Balance", "Bodenschonung", "Komfort" und "Benutzerdefiniert" umfasst.

15. Landwirtschaftliche Arbeitsmaschine mit einem Fahrerassistenzsystem (6) welches zur Durchführung eines Verfahrens nach einem der vorhergehenden Ansprüche ausgestattet ist.

## Claims

1. Method for operating an agricultural combination (1), wherein the agricultural combination (1) has an agricultural working machine (2), an agricultural implement (3) and a driver assistance system (6) with a computer unit (7), a display unit (8) and a sensor arrangement (9), wherein the sensor arrangement (9) has at least one sensor (10, 11) for recording measured values,
wherein the driver assistance system (6) provides an automatic setting device (12) which, according to at least one optimisation strategy (13), continuously optimises the mode of operation of the working machine (2) and/or the mounted implement (3) by applying a system model (14) to the current operating situation (B) and transmits control values (15, 16) for machine parameters to the agricultural working machine (2) and/or the agricultural mounted implement (3), wherein the system model (14) maps functional relationships of the agricultural combination (1),
**characterised in that**
**in that** the driver assistance system (6) is used to evaluate the current operating situation (B) with at least one quality indicator (Gᵢ) in order to assess the achievable working quality of the automatic setting device (12), the extent to which the current operating situation (B) with its operating parameters (Bᵢ) lies within the system model (14) and that the at least one quality indicator (Gᵢ) or an indicator (gᵢ) derived therefrom is displayed via the display unit (8) and/or transferred to a reaction routine (19) of the driver assistance system (6).

2. Method according to claim 1, **characterised in that** the quality indicator (Gᵢ) or one of the quality indicators (Gᵢ) depends on the extent to which the operating parameters (Bᵢ) of the operating situation (B) lie within predefined limits (S) of the system model (14), preferably, that the quality indicator (Gᵢ) or one of the quality indicators (Gᵢ) relates to a distance between the operating parameters (Bᵢ) of the operating situation (B) and the predefined limits (S) of the system model (14), preferably that the quality indicator (Gᵢ) decreases accordingly as the distance decreases.

3. Method according to claim 1 or 2, **characterised in that** the system model (14) comprises a characteristic curve field with input parameters and output parameters for mapping one of the functional relationships of the agricultural combination (1), **in that** the operating parameters (Bᵢ) of the operating situation (B) comprise the input parameters and/or output parameters and **in that** the quality indicator (Gᵢ) or one of the quality indicators (Gᵢ) depends thereon, to what extent the relevant operating parameter (Bᵢ) lies within predefined limits of the characteristic curve field, preferably **in that** the quality indicator (Gᵢ) or one of the quality indicators (Gᵢ) relates to a distance of the relevant operating parameters (Bᵢ) from the predefined limits of the characteristic curve field, further preferably **in that** the quality indicator (Gᵢ) decreases accordingly as the distance decreases.

4. Method according to one of the preceding claims, **characterised in that** the system model (14) maps a measuring range (25) of the sensor (10, 11) or one of the sensors (10, 11) of the sensor arrangement (9), **in that** the operating parameters (Bᵢ) of the operating situation (B) comprise the measured values (M) generated by the sensor arrangement (9) and **in that** the quality indicator (Gᵢ) or one of the quality indicators (Gᵢ ) depends thereon, to what extent the measured values (M) lie within predefined limits (26, 27) of the measuring range (25), preferably **in that** the quality indicator (Gᵢ) or one of the quality indicators (Gᵢ) relates to a distance of the measured values (M) from the predefined limits (26, 27) of the measuring range (25), further preferably **in that** the quality indicator (Gᵢ) decreases accordingly as the distance decreases.

5. Method according to one of the preceding claims, **characterised in that** the system model (14) maps an acceptance range for a signal quality of the at least one sensor (10, 11) of the sensor arrangement (9), **in that** the operating parameters (Bᵢ) of the operating situation (B) comprise the measured values (M) generated by the sensor arrangement (9) and **in that** the quality indicator (Gᵢ) or one of the quality indicators (Gᵢ) depends thereon, to what extent the signal quality assigned to the measured values lies within predefined limits of the acceptance range, preferably **in that** the quality indicator (Gᵢ) or one of the quality indicators (Gᵢ) relates to a distance of the signal quality assigned to the measured values (M) from the predefined limits of the acceptance range, further preferably **in that** the quality indicator (Gᵢ) decreases accordingly as the distance decreases.

6. Method according to one of the preceding claims, **characterised in that** the system model (14) maps working ranges (28) of the machine parameters, **in that** the operating parameters (Bᵢ) of the operating situation (B) comprise the control values (15, 16) for machine parameters transmitted by the automatic setting device (12) to the agricultural working machine (2) and/or the agricultural implement (3), and **in that** the quality indicator (Gᵢ) or one of the quality indicators (Gᵢ) depends thereon, to what extent the control values (15, 16) lie within predefined limits (29, 30) of the working ranges (28), preferably **in that** the quality indicator (Gᵢ) or one of the quality indicators (Gᵢ) relates to a distance of the control values (15, 16) from the predefined limits (29, 30) of the working ranges (28), further preferably **in that** the quality indicator (Gᵢ) decreases accordingly as the distance decreases.

7. Method according to one of the preceding claims, **characterised in that** the automatic setting device (12) comprises at least one control and/or regulating mechanism by means of which the control values (15, 16) to be transferred to the agricultural working machine (2) and/or to the agricultural implement (3) are generated, **in that** the system model (14) represents an acceptance range for a control or regulating quality of the control or regulating mechanism of the automatic setting device (12), **in that** the operating parameters (Bᵢ) of the operating situation (B) comprise the input and output variables of the control or regulating mechanisms, and **in that** the quality indicator (Gᵢ) or one of the quality indicators (Gᵢ) depends on the extent to which the control or regulating quality of the control or regulating mechanism of the automatic setting device (12) lies within predefined limits of the acceptance range, preferably **in that** the quality indicator (Gᵢ) or one of the quality indicators (Gᵢ) relates to a distance of the control quality of the control or regulating mechanism of the automatic setting device (12) from the limits of the acceptance range, and further preferably **in that** the quality indicator (Gᵢ ) decreases accordingly as the distance decreases.

8. Method according to one of the preceding claims, **characterised in that** at least two, preferably more than two, quality indicators (Gᵢ) are determined and **in that** a resulting quality indicator (gᵢ) is derived from the quality indicators (Gᵢ) according to an evaluation rule, which is displayed via the display unit (8) and/or transferred to a reaction routine (19) of the driver assistance system (6), preferably **in that** the evaluation rule comprises an, in particular weighted, averaging of the quality indicators (Gᵢ).

9. Method according to one of the preceding claims, **characterised in that** at least two indicator ranges (31) are assigned to the quality indicator (Gᵢ ) to be displayed, which represent different classes of achievable working qualities of the automatic setting device (12), and **in that** the quality indicator (Gᵢ) to be displayed is displayed within the indicator ranges (31) or by a display of only the indicator range (31) assigned to the quality indicator (Gᵢ) to be displayed, preferably that at least the indicator ranges "Good", "Difficult" and "Fail" are assigned to the quality indicator (Gᵢ) to be displayed, wherein the quality indicator (Gᵢ) decreases from the indicator range "Good" via the indicator range "Difficult" to the indicator range "Fail".

10. Method according to claim 9, **characterised in that** the display unit (8) has a graphical display in which the quality indicator (Gᵢ) to be displayed is indicated by a graphical element, in particular by a pointer (32), within the graphically displayed indicator ranges (31) or by a graphical display of the relevant indicator range (31).

11. Method according to one of the preceding claims, **characterised in that**, as part of the reaction routine (19), the at least one quality indicator (Gᵢ) or a quality indicator derived therefrom (Gᵢ) is checked for compliance with a predefined limit value and, if the result is negative, a warning message is output via the display unit (8) and/or the automatic setting device (12) is at least partially deactivated.

12. Method according to one of the preceding claims, **characterised in that** the agricultural operating situation (B) comprises a harvesting operation and/or a soil cultivation operation, in particular a ploughing operation and/or a sowing operation and/or a plant protection operation and/or a fertilising operation and/or a spraying operation and/or a watering operation.

13. Method according to one of the preceding claims, **characterised in that** the at least one optimisation strategy (13) comprises one or more of the individual strategies "working height or depth", "stubble cultivation", "soil loosening", "evenness", "mixing", "seedbed preparation", "crumbling" and "reconsolidation".

14. Method according to one of the preceding claims, **characterised in that** the at least one optimisation strategy (13) comprises one or more of the individual strategies "efficiency", "performance", "work quality", "balance", "soil protection", "comfort" and "user-defined".

15. Agricultural working machine with a driver assistance system (6) which is equipped for carrying out a method according to one of the preceding claims.

## Revendications

1. Procédé de fonctionnement d'une combinaison véhicule-outil agricole (1), selon lequel la combinaison véhicule-outil agricole (1) comprend un engin agricole (2), un outil agricole attelé (3) et un système d'assistance au conducteur (6) doté d'une unité de calcul (7), d'une unité d'affichage (8) et d'un agencement de capteur (9), l'agencement de capteur (9) présentant au moins un capteur (10, 11) destiné à recueillir des valeurs de mesure,
selon lequel le système d'assistance au conducteur (6) met à disposition un automate de réglage (12) qui procède en continu à une optimisation du mode de travail de l'engin agricole (2) et/ou de l'outil attelé (3), d'après au moins une stratégie d'optimisation (13), en appliquant un modèle de système (14) à la situation de fonctionnement actuelle (B), et transmet des valeurs réglantes (15, 16) pour des paramètres de machine à l'engin agricole (2) et/ou à l'outil agricole attelé (3), le modèle de système (14) reproduisant des relations fonctionnelles de la combinaison véhicule-outil agricole (1),
**caractérisé en ce que**
pour évaluer la qualité de travail pouvant être atteinte par l'automate de réglage (12), le système d'assistance au conducteur (6) permet d'évaluer la situation de fonctionnement actuelle (B) avec au moins un indicateur de qualité (Gᵢ), afin de savoir dans quelle mesure la situation de fonctionnement actuelle (B) se situe avec ses paramètres de fonctionnement (Bᵢ) dans le modèle de système (14), et **en ce que** l'indicateur de qualité (Gᵢ), au nombre d'au moins un, ou un indicateur (gᵢ) dérivé de celui-ci, est visualisé par l'intermédiaire de l'unité d'affichage (8) et/ou transmis à une routine de réaction (19) du système d'assistance au conducteur (6).

2. Procédé selon la revendication 1, **caractérisé en ce que** l'indicateur de qualité (Gᵢ) ou l'un des indicateurs de qualité (Gᵢ) dépend de la mesure dans laquelle les paramètres de fonctionnement (Bᵢ) de la situation de fonctionnement (B) se situent dans des limites (S) prédéfinies du modèle de système (14), de préférence **en ce que** l'indicateur de qualité (Gᵢ) ou l'un des indicateurs de qualité (Gᵢ) concerne un écart des paramètres de fonctionnement (Bᵢ) de la situation de fonctionnement (B) par rapport aux limites (S) prédéfinies du modèle de système (14), de préférence **en ce que** l'indicateur de qualité (Gᵢ) baisse en conséquence lorsque l'écart diminue.

3. Procédé selon la revendication 1 ou 2, **caractérisé en ce que** le modèle de système (14) comprend un champ de caractéristiques avec des paramètres d'entrée et des paramètres de sortie, en vue de la représentation de l'une des relations fonctionnelles de la combinaison véhicule-outil agricole (1), **en ce que** les paramètres de fonctionnement (Bᵢ) de la situation de fonctionnement (B) englobent les paramètres d'entrée et/ou les paramètres de sortie, et **en ce que** l'indicateur de qualité (Gᵢ) ou l'un des indicateurs de qualité (Gᵢ) dépend de la mesure dans laquelle le paramètre de fonctionnement (Bᵢ) concerné se situe dans des limites prédéfinies du champ de caractéristiques, de préférence **en ce que** l'indicateur de qualité (Gᵢ) ou l'un des indicateurs de qualité (Gᵢ) concerne un écart des paramètres de fonctionnement (Bᵢ) concernés par rapport aux limites prédéfinies du champ de caractéristiques, ou encore de préférence **en ce que** l'indicateur de qualité (Gᵢ) baisse en conséquence lorsque l'écart diminue.

4. Procédé selon l'une des revendications précédentes, **caractérisé en ce que** le modèle de système (14) reproduit une plage de mesure (25) du capteur (10, 11) ou de l'un des capteurs (10, 11), **en ce que** les paramètres de fonctionnement (Bᵢ) de la situation de fonctionnement (B) englobent les valeurs de mesure (M) générées par l'agencement de capteurs (9), et **en ce que** l'indicateur de qualité (Gᵢ) ou l'un des indicateurs de qualité (Gᵢ) dépend de la mesure dans laquelle les valeurs de mesure (M) se situent dans des limites prédéfinies (26, 27) de la plage de mesure (25), de préférence **en ce que** l'indicateur de qualité (Gᵢ) ou l'un des indicateurs de qualité (Gᵢ) concerne un écart des valeurs de mesure (M) par rapport aux limites prédéfinies (26, 27) de la plage de mesure (25), ou encore de préférence **en ce que** l'indicateur de qualité (Gᵢ) baisse en conséquence lorsque l'écart diminue.

5. Procédé selon l'une des revendications précédentes, **caractérisé en ce que** le modèle de système (14) reproduit une plage acceptable pour une qualité de signal du capteur (10, 11), au nombre d'au moins un, de l'agencement de capteurs (9), **en ce que** les paramètres de fonctionnement (Bᵢ) de la situation de fonctionnement (B) englobent les valeurs de mesure (M) générées par l'agencement de capteurs (9), et **en ce que** l'indicateur de qualité (Gᵢ) ou l'un des indicateurs de qualité (Gᵢ) dépend de la mesure dans laquelle la qualité de signal associée aux valeurs de mesure (M) se situe dans des limites prédéfinies de la plage acceptable, de préférence **en ce que** l'indicateur de qualité (Gᵢ) ou l'un des indicateurs de qualité (Gᵢ) concerne un écart de la qualité de signal associée aux valeurs de mesure (M) par rapport aux limites prédéfinies de la plage acceptable, ou encore de préférence **en ce que** l'indicateur de qualité (Gᵢ) baisse en conséquence lorsque l'écart diminue.

6. Procédé selon l'une des revendications précédentes, **caractérisé en ce que** le modèle de système (14) reproduit des plages de travail (28) des paramètres de machine, **en ce que** les paramètres de fonctionnement (Bᵢ) de la situation de fonctionnement (B) englobent les valeurs réglantes (15, 16) pour des paramètres de machine transmises par l'automate de réglage (12) à l'engin agricole (2) et/ou à l'outil agricole attelé (3), et **en ce que** l'indicateur de qualité (Gᵢ) ou l'un des indicateurs de qualité (Gᵢ) dépend de la mesure dans laquelle les valeurs réglantes (15, 16) se situent dans des limites prédéfinies (29, 30) des plages de travail (28), de préférence **en ce que** l'indicateur de qualité (Gᵢ) ou l'un des indicateurs de qualité (Gᵢ) concerne un écart des valeurs réglantes (15, 16) par rapport aux limites prédéfinies (29, 30) des plages de travail (28), ou encore de préférence **en ce que** l'indicateur de qualité (Gᵢ) baisse en conséquence lorsque l'écart diminue.

7. Procédé selon l'une des revendications précédentes, **caractérisé en ce que** l'automate de réglage (12) comprend au moins un mécanisme de commande et/ou de réglage à l'aide duquel sont générées les valeurs réglantes (15, 16) à transmettre à l'engin agricole (2) et/ou à l'outil agricole attelé (3), **en ce que** le modèle de système (14) reproduit une plage acceptable pour une qualité de commande et de réglage du mécanisme de commande ou de réglage de l'automate de réglage (12), **en ce que** les paramètres de fonctionnement (Bᵢ) de la situation de fonctionnement (B) englobent les grandeurs d'entrée et de sortie des mécanismes de commande et/ou de réglage, et **en ce que** l'indicateur de qualité (Gᵢ) ou l'un des indicateurs de qualité (Gᵢ) dépend de la mesure dans laquelle la qualité de commande ou de réglage du mécanisme de commande ou de réglage de l'automate de réglage (12) se situe dans des limites prédéfinies de la plage acceptable, de préférence **en ce que** l'indicateur de qualité (Gᵢ) ou l'un des indicateurs de qualité (Gᵢ) concerne un écart de la qualité de commande ou de réglage du mécanisme de commande ou de réglage de l'automate de réglage (12) par rapport aux limites de la plage acceptable, ou encore de préférence **en ce que** l'indicateur de qualité (Gᵢ) baisse en conséquence lorsque l'écart diminue.

8. Procédé selon l'une des revendications précédentes, **caractérisé en ce que** l'on détermine au moins deux, de préférence plus de deux indicateurs de qualité (Gᵢ), et **en ce que**, selon une règle d'évaluation, on dérive des indicateurs de qualité (Gᵢ) un indicateur de qualité résultant (gᵢ) qui est indiqué par l'intermédiaire de l'unité d'affichage (8) et/ou est transmis à une routine de réaction (19) du système d'assistance au conducteur (6), de préférence **en ce que** la règle d'évaluation comprend un calcul de la moyenne, notamment pondéré, des indicateurs de qualité (Gᵢ).

9. Procédé selon l'une des revendications précédentes, **caractérisé en ce que** l'on associé à l'indicateur de qualité (Gᵢ) à afficher, au moins deux plages d'indicateur (31) qui représentent deux catégories différentes de qualités de travail pouvant être atteintes de l'automate de réglage (12), et **en ce que** l'indicateur de qualité (Gᵢ) à afficher est visualisé dans les plages d'indicateur (31) ou par un affichage de la seule plage d'indicateur (31) associée à l'indicateur de qualité (Gᵢ) à afficher, de préférence **en ce qu'**au moins les plages d'indicateur « Good », « Difficult » et « Fail » sont associées à l'indicateur de qualité (Gᵢ) à afficher, l'indicateur de qualité (Gᵢ) diminuant depuis la plage d'indicateur « Good » jusqu'à la plage d'indicateur « Fail », en passant par la plage d'indicateur « Difficult ».

10. Procédé selon la revendication 9, **caractérisé en ce que** l'unité d'affichage (8) présente un affichage graphique dans lequel l'indicateur de qualité (Gᵢ) à afficher est représenté par un élément graphique, notamment par une aiguille (32), dans les plages d'indicateur (31) représentées sous une forme graphique, ou par un affichage graphique de la plage d'indicateur (31) pertinente.

11. Procédé selon l'une des revendications précédentes, **caractérisé en ce que** dans le cadre de la routine de réaction (19), l'indicateur de qualité (Gᵢ), au nombre d'au moins un, ou un indicateur de qualité (Gᵢ) dérivé de celui-ci est vérifié afin de savoir si une valeur limite prédéfinie est respectée et, en cas de résultat négatif, un message d'avertissement est émis par l'intermédiaire de l'unité d'affichage (8) et/ou l'automate de réglage (12) est désactivé au moins en partie.

12. Procédé selon l'une des revendications précédentes, **caractérisé en ce que** la situation de fonctionnement (B) agricole comprend une opération de récolte et/ou un travail du sol, en particulier un labourage et/ou une opération de semis et/ou une opération phytosanitaire et/ou une opération d'épandage d'engrais et/ou une opération de pulvérisation et/ou une opération d'irrigation.

13. Procédé selon l'une des revendications précédentes, **caractérisé en ce que** la stratégie d'optimisation (13), au nombre d'au moins une, comprend une ou plusieurs des stratégies individuelles « hauteur ou profondeur de travail », « déchaumage », « ameublissement du sol », « planéité », « mélangeage » « préparation du lit de semence », « émiettement » et « rappuyage ».

14. Procédé selon l'une des revendications précédentes, **caractérisé en ce que** la stratégie d'optimisation (13), au nombre d'au moins une, comprend une ou plusieurs des stratégies individuelles « efficacité », « rendement », « qualité de travail », « équilibre », « préservation du sol », « confort » et « défini par l'utilisateur ».

15. Engin agricole doté d'un système d'assistance au conducteur (6) qui est équipé pour la mise en oeuvre d'un procédé selon l'une des revendications précédentes.
